# EUROPÄISCHE PATENTSCHRIFT

(11) **EP 2 086 777 B1**
(45) Veröffentlichungstag und Bekanntmachung des Hinweises auf die Patenterteilung: **15.02.2012**
(21) Anmeldenummer: 07856442.4
(22) Anmeldetag: 07.12.2007
(51) Int. Cl.: B60H 1/00

(54) **FAHRZEUGHEIZUNGS- UND/ODER KLIMAANLAGE MIT KOMBINIERTER LUFTMISCH- UND -VERTEILERKLAPPE**
VEHICLE HEATING AND/OR AIR CONDITIONING SYSTEM COMPRISING A COMBINED AIR MIXING AND DISTRIBUTING FLAP
INSTALLATION DE CHAUFFAGE ET/OU DE CLIMATISATION D'UN VÉHICULE DOTÉE D'UNE VALVE MIXTE DE MÉLANGE ET DE DISTRIBUTION D'AIR

(30) Priorität: 07.12.2006 EP 06025338; 14.08.2007 DE 102007038503
(43) Veröffentlichungstag der Anmeldung: 12.08.2009
(73) Patentinhaber: Behr GmbH & Co. KG, 70469 Stuttgart (DE); Behr America, Inc, Troy, Michigan 48083 (US); Behr France Rouffach SAS, 68250 Rouffach (FR)
(72) Erfinder: BERGER, Michael, 71642 Ludwigsburg (DE); LINDNER, Björn, Troy, MI 48085 (US); ROYER, Olivier, 68040 Ingersheim (FR); SATRAPA, Alexander, 71069 Sindelfingen (DE); SCHALL, Matthias, 73760 Ostfildern-Ruit (DE); WOLF, Walter, 71570 Oppenweiler-Zell (DE); FEITH, Thomas, 70825 Korntal-Münchingen (DE)
(74) Vertreter: Grauel, Andreas
(86) Internationale Anmeldenummer: PCT/EP2007/010637
(87) Internationale Veröffentlichungsnummer: WO 2008/068027

(56) Entgegenhaltungen:
- EP-A- 0 423 778
- EP-A- 1 477 347
- EP-A1- 1 306 241
- EP-B1- 1 930 191
- DE-C1- 19 837 338
- GB-A- 2 168 786
- GB-A- 2 333 355
- US-A- 5 062 352
- US-A1- 2004 069 484

## Beschreibung

Die Erfindung betrifft eine Fahrzeugheizungs- und/oder Klimaanlage mit kombinierter Luftmisch- und -verteilerklappe gemäß dem Oberbegriff des Anspruchs 1.

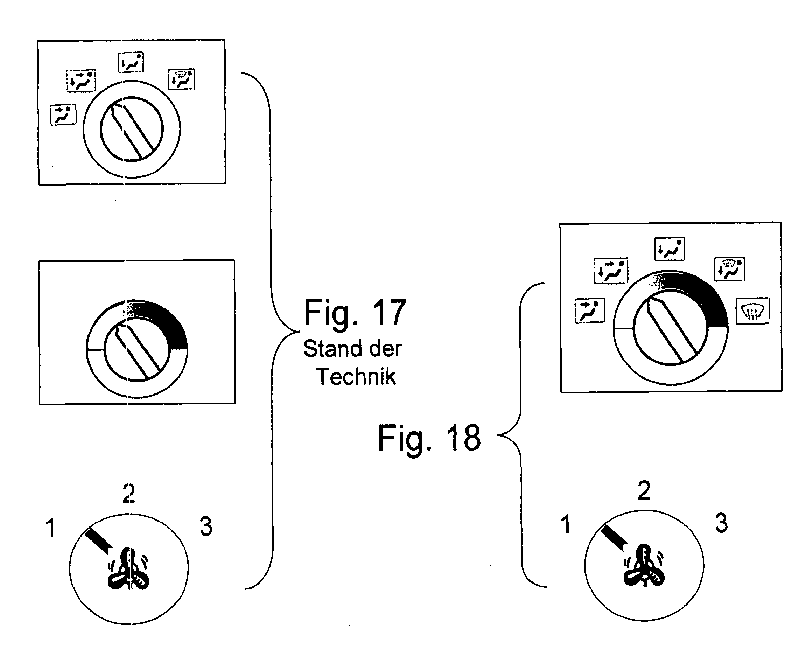

Für die Regelung der Gebläsestärke, der Temperatur und der Luftverteilung sind üblicherweise drei getrennt ausgebildete Bedienelemente erforderlich, wie in Fig. 17 angedeutet ist. Entsprechend deren Stellung werden über eine entsprechende Regelung die Drehzahl des Gebläsemotors eingestellt, die Stellung der vor dem Heizer und/oder Verdampfer angeordneten Temperaturklappen und die Stellungen der einzelnen Klappen an den Öffnungen im Mischraum zu den Luftkanälen für die Belüftung, zum Fußraum und für den Defrostbetrieb eingestellt. Zumindest die Temperaturregelung und die Regelung der Luftverteilung auf die einzelnen Luftkanäle erfolgt üblicherweise stufenlos, d.h. beliebige Betriebszustände sind möglich. Hierbei kann, um ein komfortables Innenraumklima im Fahrzeug zu erzeugen, ein laufendes Nachregeln erforderlich sein. Auch sind bestimmte, üblicherweise ungeeignete Betriebszustände, wie insbesondere das Einblasen von kalter Luft in den Fußraum, möglichst zu vermeiden.

Gemäß einer anderen Ausführungsart kann die Temperaturklappe auch nach dem Heizer angeordnet sein.

Aus der EP 1 306 241 A1 ist eine Fahrzeugheizungs- und Klimaanlage mit kombinierter Luftmisch- und -verteilerklappe bekannt, welche einen zuführenden Luftkanal, der Luft zu einem Heizer führt, und ein Bypass zum Heizer vorgesehen ist, und drei getrennt ausgebildete, weiterführende Luftkanäle aufweist. Hierbei ist eine kombinierte Luftmisch- und - verteilerklappe für die Regelung des Luftstroms durch den Heizer bzw. durch den Bypass hierzu sowie die Regelung der Luftverteilung der temperierten Luft auf zwei der drei Luftkanäle zum Fahrzeuginnenraum vorgesehen. Die Klappe ist als Trommelklappe ausgebildet, wobei sie zwei einander gegenüberliegende innere Klappenflächen aufweist, welche im Bereich der Zylinderfläche der Trommelklappe angeordnet sind. Die beiden von der Trommelklappe geregelten Luftkanäle zum Fahrzeuginnenraum sind direkt benachbart zueinander angeordnet. Der dritte Luftkanal wird mit einer herkömmlichen Doppelflügelklappe geregelt. Die Austrittsöffnung des dritten Luftkanals, bei dem es sich um den Fußraum-Luftkanal handelt, ist im Wesentlichen gegenüberliegend den Austrittsöffnungen der beiden anderen Luftkanäle angeordnet.

Die US 5,062,352 betrifft eine Klimaanlage mit eine kombinierte Luftmisch- und Verteilerklappe, wobei eins Aufteilung des Luftstroms vor dem Verdampfer vorgesehen ist. Die Klappe ist als hohlzylindrische Trommelklappe ausgebildet, wobei jeweils voneinander beabstandet zwei Eintrittsöffnungen und drei Austrittsöffnungen vorgesehen sind, welche durch die Klappe regelbar sind. Die Klappe weist drei Öffnungen auf, welche verteilt über den Umfang angeordnet sind. Hierbei dienen eine oder zwei Öffnungen dem Eintritt der Luft in die Klappe, und eine oder zwei Öffnungen dienen dem Auslass der Luft aus der Klappe.

Die DE 198 37 338 A1 offenbart ein Steuerorgan für eine Luftverteilungsvorrichtung mit einer Trommelklappe, welche eine sich über die Länge ändernde Gestalt aufweist. Die Trommelklappe ist hohlzylindrisch ausgebildet und weist eine Mehrzahl von Öffnungen auf, wobei in einzelnen Ebenen senkrecht zur Mittellängsachse der Trommelklappe vier Öffnungen vorgesehen sein können. Die Anordnung weist zwei Eintrittsbereiche auf, wobei einer von Frischluft durchströmbar ist. Dieser frischluftdurchströmte Eintrittsbereich ist unterteilt ausgebildet, so dass ein Teilluftstrom, der Frischluft durch einen vom Kühlwasser durchströmten Wärmetauscher strömt, während der zweite Teilluftstrom direkt zur Trommelklappe gelangt. Der andere Eintrittsbereich wird von Umluft durchströmt, wobei die gesamte Umluft einen entsprechenden Wärmetauscher durchströmt. Gemäß einer Ausführungsform durchströmt sowohl die Frisch- als auch die Umluft zuerst einen Verdampfer. Die Austrittsöffnungen, nämlich Defrost-Luftkanal, Belüftungsluftkanal und Fußraumluftkanal, sind in dieser Reihenfolge und beabstandet voneinander über den Umfang verteilt angeordnet.

Aus der GB 2 168 786 A ist eine weitere Luftmisch- und -verteilerklappe bekannt, welche die Luftverteilung von zwei zuleitenden Luftkanälen, nämlich einem Warm- und einem Kaltluftkanal, auf drei zum Fahrzeuginnenraum führenden Kanälen, nämlich den Kanälen zur Fußraumbelüftung, zur Front-und Seitendüse (Belüftung) und zum Defrostbetrieb, verteilt wird. Diese Klappe lässt noch Wünsche offen

Es ist Aufgabe der Erfindung, eine verbesserte Fahrzeugheizungs- und/oder Klimaanlage mit kombinierter Luftmisch- und -verteilerklappe zur Verfügung zu stellen.

Diese Aufgabe wird gelöst durch eine Fahrzeugheizungs- und/oder Klimaanlage mit kombinierter Luftmisch- und -verteilerklappe mit den Merkmalen des Anspruchs 1. Vorteilhafte Ausgestaltungen sind Gegenstand der Unteransprüche.

Die Erfindung betrifft eine Heizungs- und/oder Klimaanlage, insbesondere für ein Kraftfahrzeug, die von dem Fahrzeuginnenraum zuzuführender Luft zur Temperierung derselben durchströmbar ist, mit einer kombinierten Luftmisch- und Verteilerklappe, die zumindest teilweise zylinderförmig ausgebildet ist, um eine Drehachse verdrehbar ist, und zur Regelung der Lufttemperatur und der Luftverteilung der dem Fahrzeuginnenraum zuzuführenden Luft dient, bei der zwei zuführende Luftkanäle, wobei es sich bevorzugt um einen Warmluftkanal und einen Kaltluftkanal handelt, und mindestens drei weiterführende Luftkanäle, wobei es sich vorzugsweise um einen Belüftungskanal, einen Fußraumkanal und einen Defrostkanal handelt, vorgesehen sind. Hierbei weist die kombinierten Luftmisch- und Verteilerklappe Flächen auf, welche derart ausgebildet sind, dass sie in einer Stellung, in welcher der eine zuführende Luftkanal vollständig geöffnet ist, den jeweils anderen zuführenden Luftkanal vollständig verschließt, wobei die Flächen durch Bereiche der Mantelfläche der kombinierten Luftmisch- und Verteilerklappe gebildet werden. Dies stellt sicher, dass keine Luft durch den im entsprechenden Betriebszustand nicht benötigten zuführenden Luftkanal strömt, so dass die gewünschte Temperatur nicht verfälscht wird. Dadurch, dass nur eine Klappe vorgesehen ist, vereinfacht sich die Regelung in Folge der deutlich verringerten Anzahl von Aktuatoren. Die Betätigung kann automatisch oder von Hand erfolgen Durch die Vereinfachung wird auch die Einstellbarkeit von Hand vereinfacht, so dass beispielsweise der Fahrer bei einer Bedienung der Heizungs- und/oder Klimaanlage nicht so stark während des Fahrens abgelenkt wird.

Bei der Klappe handelt es sich bevorzugt um eine Art Trommelklappe. Der Radius der Klappe liegt vorzugsweise im Bereich von 40 bis 100 mm, insbesondere im Bereich von 60 bis 75 mm und ist insbesondere bevorzugt größer als 50mm. Die Länge der Klappe beträgt bevorzugt 150 mm bis 300 mm. Der eintrittsseitige Öffnungswinkel beträgt bevorzugt 60 bis 90°, der austrittsseitige Öffnungswinkel beträgt - bei drei über den Umfang verteilten Austrittsöffnungen (Belüftung, Fußraum und Defrost) - vorzugsweise 30 bis 55°.

Bei der Anlage handelt es sich bevorzugt um eine Heizungs- und Klimaanlage mit einem Verdampfer, der von dem gesamten Luftstrom durchströmt wird, und einem Heizer (und ggf. Zuheizer), der bedarfsgeregelt von Luft durchströmt wird, so dass sich zwei zuführende Luftkanäle ergeben, nämlich ein direkt vom Verdampfer kommender Kaltluftkanal und ein vom Heizer kommender Warmluftkanal. Alternativ kann es sich bei der Anlage um eine reine Heizungsanlage handeln, die einen Luftkanal aufweist, der die Luft durch den Heizer leitet, und einen anderen Luftkanal aufweist, der die Luft vorbei am Heizer leitet, so dass beim zweiten Luftkanal keine Temperierung der Luft erfolgt. Auch in diesem Fall ist somit ein Warmluftkanal und ein Kaltluftkanal vorhanden, in welchem nicht zusätzlich erwärmte Luft strömt. Entsprechend kann es sich um ein reines Klimagerät handeln, bei dem ein Luftkanal Luft durch den Verdampfer leitet und ein zweiter Luftkanal die Luft vorbei am Verdampfer leitet.

Die Luftmisch- und Verteilerklappe ist bevorzugt derart ausgebildet, dass jede der Öffnungen der zuführenden und weiterführenden Luftkanäle in mindestens einer Klappenstellung vollständig verschlossen ist.

Ebenfalls ist die Luftmisch- und Verteilerklappe bevorzugt derart ausgebildet, dass jede der Öffnungen der zuführenden und weiterführenden Luftkanäle in mindestens einer Klappenstellung vollständig geöffnet ist.

Die schließenden Flächen der Luftmisch- und Verteilerklappe, welche die nicht benötigten, zuführenden Luftkanäle verschließen, werden bevorzugt durch zylinderförmige Bereiche gebildet.

Die Flächen werden vorzugsweise durch Bereiche der Mantelfläche der kombinierten Luftmisch- und Verteilerklappe gebildet. Diese Mantelfläche ist bevorzugt zylinderförmig ausgebildet. Das Vorsehen von Dichtlippen oder anderen abdichtenden Elementen an den Enden der verschließenden Flächen ist möglich, um ein Umströmen von Luft zu verhindern.

Insbesondere bevorzugt sind die drei Luftkanäle ohne wesentliche Abstände voneinander ausgebildet. Besonders bevorzugt ist keine gleichzeitige Luftzufuhr über den Belüftungskanal und den Defrostkanal möglich.

Bevorzugt ist als weiterführende Luftkanäle ein Defrostkanal benachbart, insbesondere ohne einen wesentlichen Abstand, neben einem Fußraumkanal vorgesehen. Unter ohne wesentlichen Abstand wird hierbei im Folgenden ein Abstand von maximal etwas mehr als der doppelten Wandstärke verstanden.

Dadurch, dass ein Defrostkanal gegenüberliegend einem Warmluftkanal angeordnet ist, insbesondere bevorzugt möglichst exakt diagonal gegenüberliegend, kann sichergestellt werden, dass im Defrostbetrieb möglichst viel, insbesondere bevorzugt ausschließlich, warme Luft vom Warmluftkanal der Windschutzscheibe zugeführt wird, so dass ein schnelles Enteisen oder Entfernen eines Beschlags möglich ist.

Für den Komfort der Insassen ist es vorteilhaft, wenn ein Belüftungskanal gegenüberliegend einem Kaltluftkanal angeordnet ist. Dies ermöglicht, dass beispielsweise bei einem reinen Belüftungsbetrieb kühlere Luft als bei einem Mischbetrieb Belüftung - Fußraumbelüftung dem Fahrzeuginnenraum zugeführt wird. Ferner kann bei Bedarf eine schnelle Abkühlung des Fahrzeuginnenraums erreicht werden.

Die Reihenfolge der Luftkanäle um die Klappe herum ist vorzugsweise Folgende:

Kaltluftkanal, Warmluftkanal, Belüftungskanal, Defrostkanal und Fußraumkanal. In diesem Fall ist jedoch keine Kombination von Belüftung und Fußraumbelüftung möglich. In Bezug auf eine verbesserte Akustik der Mitteldüse (Belüftung) ist die Reihenfolge Kaltluftkanal, Warmluftkanal, Fußraumkanal, Defrostkanal und Belüftungskanal vorteilhaft.

Besonders bevorzugt sind in der kombinierten Luftmisch- und Verteilerklappe Luftleitelemente und/oder Kanalstrukturen ausgebildet. Diese Luftleitelemente sorgen für eine gute Durchmischung der Luft und/oder führen gezielt warme oder kalte Luft in einer bestimmten Winkelstellung der Klappe zu einer Öffnung. Die Luftleitelemente sind insbesondere bevorzugt auf der Einströmseite angeordnet.

Gemäß einer bevorzugten Ausführungsform ist der Öffnungswinkel für alle drei weiterführenden Luftkanäle jeweils gleich groß. Dies ermöglicht eine vereinfachte Ausgestaltung der Klappe, wobei bevorzugt die Luftaustrittsöffnung der Klappe der Öffnung der weiterführenden Luftkanäle entspricht.

Der Öffnungswinkel aller drei weiterführenden Luftkanäle liegt vorzugsweise in einem Bereich von jeweils 30 bis 60°, insbesondere bevorzugt bei ca. 36°.

Der Öffnungswinkel der zuführenden Luftkanäle liegt vorzugsweise in einem Bereich von jeweils 30 bis 60°, insbesondere bevorzugt bei ca. 36°.

Besonders bevorzugt ist eine Eintrittstrennung der beiden zuführenden Luftkanäle von 0 bis 45°, insbesondere von 18 bis 36°, vorgesehen. Dies ermöglicht sowohl Zwischenstellungen, bei denen sowohl Kalt- als auch Warmluft weitergeführt wird, als auch Stellungen, bei denen ausschließlich Kalt- oder Warmluft weitergeführt wird. Durch den vergrößerten Zwischenbereich kann ein unerwünschtes Überströmen von Kalt- oder Warmluft im Falle einer Stellung, bei der ausschließlich Warm- bzw. Kaltluft gewünscht wird, einfach verhindert werden.

Eine Asymmetrie der Mittelebene beider zuführender Luftkanäle bezüglich der Mittelebene des mittleren der weiterführenden Luftkanäle von 0 bis 30°, insbesondere von 9 bis 18°, ist vorgesehen. Diese Asymmetrie ermöglicht eine gezieltere Koppelung einzelner Luftkanäle, bspw. des Kaltluftkanals mit dem Belüftungskanal und des Warmluftkanals mit dem Defrostkanal.

Die Luftmisch- und Verteilerklappe weist vorzugsweise zwei innere Klappenflächen auf, die einander gegenüberliegend angeordnet sind und einen Luftkanal bilden, wobei die Klappenflächen in Luftströmungsrichtung gesehen aufeinander zulaufen. Der Öffnungswinkel der Klappenflächen beträgt vorzugsweise 5 bis 30°, insbesondere bevorzugt 10 bis 25°. Insbesondere bevorzugt ist die Eintrittsöffnung, die durch die Klappenflächen gebildet wird, größer als die Austrittsöffnung der zuführenden Luftkanäle.

Bevorzugt entspricht die Austrittsöffnung, die durch die Klappenflächen gebildet wird, den Eintrittsöffnungen der weiterführenden Luftkanälen, so dass zumindest in den Stellungen, bei denen die gesamte Luft einem weiterführenden Luftkanal zugeführt wird, am Luftaustritt aus der Klappe keine Verwirbelungen entstehen.

Besonders bevorzugt ist mindestens eine Stellung der Luftmisch- und Verteilerklappe vorgesehen, in welcher die zuführenden Luftkanäle von den weiterführenden Luftkanälen durch mindestens eine durchgehende Klappenfläche der Luftmisch- und Verteilerklappe getrennt sind, d.h. die Öffnungen der zuführenden Luftkanäle sind vollständig von den Öffnungen der weiterführenden Luftkanäle getrennt, so dass die Klappe vollständig geschlossen sein kann.

Vorzugsweise weisen die zwei zuführenden Luftkanäle und/oder mindestens zwei weiterführende Luftkanäle direkt aneinander angrenzende Öffnungen zur kombinierten Luftmisch- und Verteilerklappe auf.

Besonders bevorzugt ist im Bereich der Öffnung zum weiterführenden Fußraumkanal, eine Versperrung angeordnet, welche auf der Seite der direkt angrenzenden Öffnung zum Belüftungskanal angeordnet ist. Die Versperrung verhindert ein Einströmen von kalter Luft in den Fußraum, welches üblicherweise als unangenehm empfunden wird.

Insbesondere bevorzugt ist im Bereich der Öffnung zum zuführenden Kaltluftkanal eine Versperrung angeordnet, welche auf der Seite der direkt angrenzenden Öffnung zum zuführenden Warmluftkanal angeordnet ist. Diese Versperrung schließt den Kaltluftkanal bereits vor Erreichen der Endstellung der Klappe in der maximal warmen Stellung, so dass auch bei einem Mischbetrieb Fußraum/Defrost bereits die maximale Temperatur erreicht wird.

Besonders bevorzugt ist für die Regelung der Luftaustrittstemperatur in den Fahrzeuginnenraum und zur Regelung der Luftverteilung auf die Luftkanäle genau ein gemeinsames Bedienelement vorgesehen, und es besteht ein fester Zusammenhang zwischen der Luftverteilung auf die Luftkanäle und der Luftaustrittstemperatur. Unabhängig von der Temperatur und der Luftverteilung auf die einzelnen Ausströmer im Fahrzeuginnenraum kann der Gesamtluftmassenstrom, d.h. die Gebläseleistung, über ein zweites Bedienelement geregelt werden.

Wird die Temperatur ausgehend von der Betriebsstellung "100% Belüftung", also der minimalen Temperatur, erhöht, so öffnet sich allmählich die Öffnung zum Fußkanal, wobei die Öffnung zum Belüftungskanal vollständig geschlossen ist, bevor die Öffnung zum Fußkanal vollständig geöffnet ist.

Gemäß einer bevorzugten Regelungsvariante ist die Kopplung des Zusammenhangs Temperatur-Luftverteilung so ausgeführt, dass die maximale Temperatur bereits vor einem vollständigen Verschließen des Fußkanals erreicht wird, wobei bei einer Temperaturerhöhung das Öffnen des Defrostkanals erst nach dem Erreichen Betriebszustands "100% Fußraum" beginnt. Die Zusammenhänge Temperatur-Luftverteilung können jedoch auch anders sein.

Insbesondere bevorzugt ist in der Betriebsstellung "100% Defrost" die maximale Temperatur vorgesehen, wobei die gesamte Luft ausschließlich dem Defrostkanal zugeführt wird.

Eine Reduzierung der Anzahl an Bedienelemente, d.h. vorliegend dem Zusammenlegen des Temperatureinstellers mit dem Luftverteilungseinsteller, ist sowohl im Falle wasserseitig als auch luftseitig geregelter Klimaanlagen möglich.

Im Folgenden wird die Erfindung anhand mehrerer Ausführungsbeispiele, teilweise unter Bezugnahme auf die Zeichnung, im Einzelnen erläutert. Es zeigen:
- Fig. 1: eine vereinfachte, nicht beanspruchte ausschnittsweise geschnittene Darstellung einer Kraftfahrzeug-Heizungs- und Klimaanlage gemäß dem ersten Ausführungsbeispiel im Bereich der kombinierten Luftmisch- und -verteilerklappe in einer Stellung 100% Belüftung,
- Fig. 2: eine Darstellung der Luftmisch- und -verteilerklappe von Fig. 1 in einer Stellung 50% Belüftung und 50% Fußraumbelüftung,

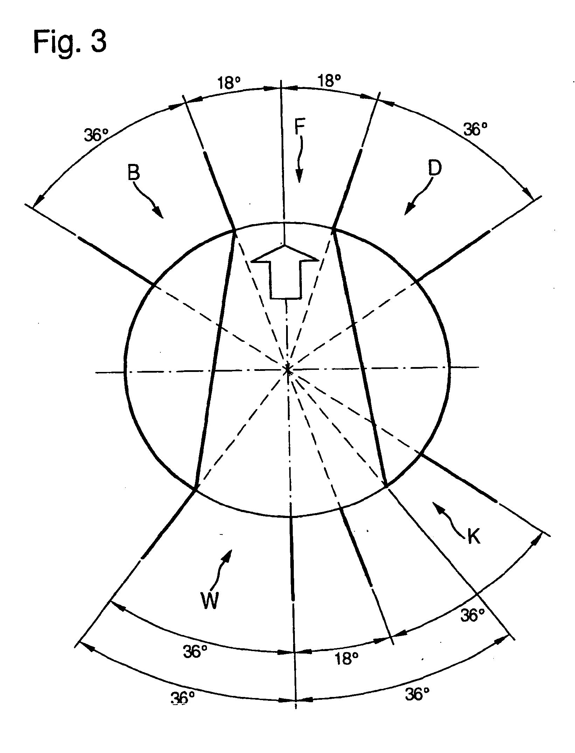

- Fig. 3: eine Darstellung der Luftmisch- und -verteilerklappe von Fig. 1 in einer Stellung 100% Fußraumbelüftung,

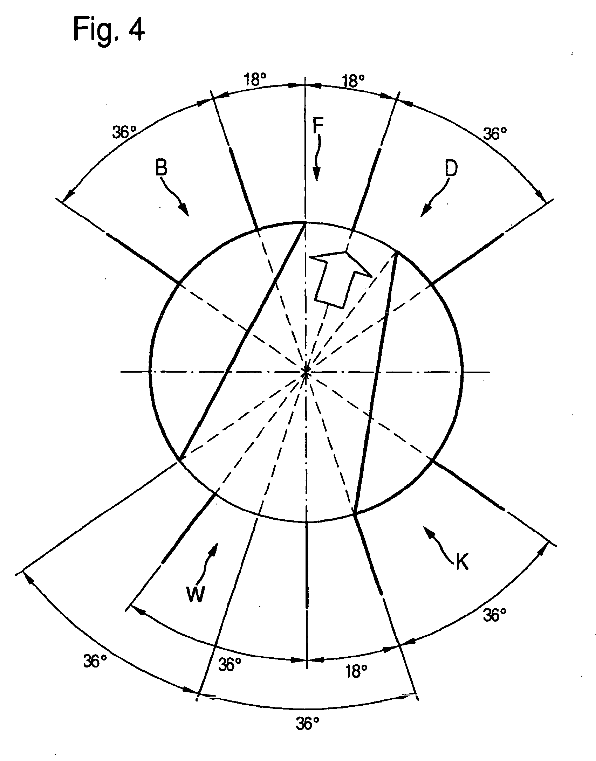

- Fig. 4: eine Darstellung der Luftmisch- und -verteilerklappe von Fig. 1 in einer Stellung 50% Fußraumbelüftung und 50% Defrostbetrieb,

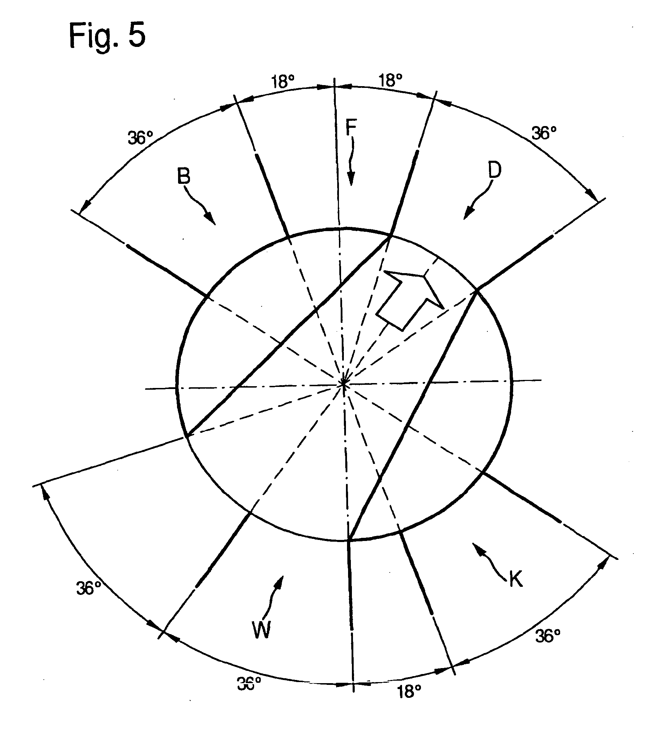

- Fig. 5: eine Darstellung der Luftmisch- und -verteilerklappe von Fig. 1 in einer Stellung 100% Defrostbetrieb,

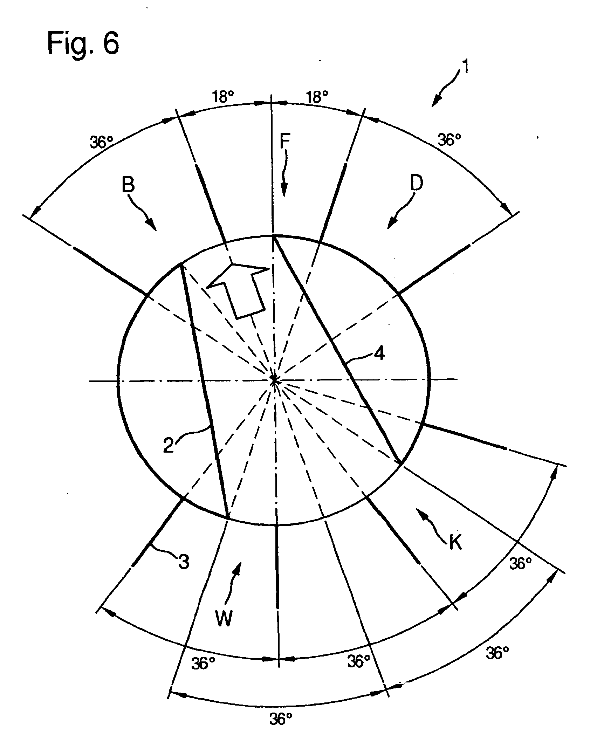

- Fig. 6: eine stark vereinfachte, nicht beanspruchte ausschnittsweise geschnittene Darstellung einer Kraftfahrzeug-Heizungs- und Klimaanlage gemäß dem zweiten Ausführungsbeispiel im Bereich der kombinierten Luftmisch- und -verteilerklappe in einer Stellung 50% Belüftung und 50% Fußraumbelüftung,
- Fig. 7: eine Darstellung der Luftmisch- und -verteilerklappe von Fig. 6 in einer Stellung 100% Fußraumbelüftung,
- Fig. 8a-g: verschiedene Beispiele für Luftleitelemente und Verdrängungskörper, die in einer Klappe angeordnet sein können,
- Fig. 9: einen Schnitt durch eine nicht beanspruchte Kraftfahrzeug-Heizungs- und Klimaanlage in der Betriebsstellung "Belüftung 100% kalt",
- Fig. 10: einen Schnitt durch die Anlage von Fig. 9 in einer Betriebsstellung "Belüftung temperiert",
- Fig. 11: einen Schnitt durch die Anlage von Fig. 9 in einer Betriebsstellung "Fußraum temperiert",
- Fig. 12: einen Schnitt durch die Anlage von Fig. 9 in einer Betriebsstellung "Fußraum 100% warm",
- Fig. 13: einen Schnitt durch die Anlage von Fig. 9 in einer Betriebsstellung "Defrost 100% warm",
- Fig. 14: eine schematische Darstellung eines möglichen Regelzusammenhangs zwischen der Luftverteilung auf die einzelnen Luftkanäle zu den Ausströmern bzw. der Temperatur und der Stellung des Bedienelements,
- Fig. 15: eine stark vereinfachte ausschnittsweise geschnittene Darstellung einer nicht beanspruchten Kraftfahrzeug Heizungs- und Klimaanlage zur Verdeutlichung der Funktion des Bedienelements und schematischer Andeutung der Regelzusammenhänge von Luftverteilung auf die einzelnen Luftkanäle zu den Ausströmern und Temperatur,
- Fig. 16: eine Abwandlung der Kraftfahrzeug-Heizungs- und Klimaanlage von Fig. 15,
- Fig. 17: eine schematische Darstellung der bei einer herkömmlichen Klimaanlage verwendeten Bedienelemente,
- Fig. 18: eine schematische Darstellung der verwendeten Bedienelemente,
- Fig. 19: eine vereinfachte nicht beanspruchte ausschnittsweise geschnittene Darstellung einer Kraftfahrzeug-Heizungs- und Klimaanlage gemäß einem weiteren Ausführungsbeispiel im Bereich der kombinierten Luftmisch- und -verteilerklappe in einer Stellung 100% Belüftung,
- Fig. 20: eine schematische Darstellung des Regelzusammenhangs zwischen der Luftverteilung auf die einzelnen Luftkanäle zu den Ausströmern bzw. der Temperatur und der Stellung des Bedienelements bei der in Fig. 19 dargestellten Luftmisch- und -verteilerklappe,
- Fig.21: eine vereinfachte nicht beanspruchte, ausschnittsweise geschnittene Darstellung einer Kraftfahrzeug-Heizungs- und Klimaanlage gemäß einem weiteren Ausführungsbeispiel im Bereich der kombinierten Luftmisch- und -verteilerklappe in einer Stellung 100% Belüftung,
- Fig. 22: eine schematische Darstellung des Regelzusammenhangs zwischen der Luftverteilung auf die einzelnen Luftkanäle zu den Ausströmern bzw. der Temperatur und der Stellung des Bedienelements bei der in Fig. 21 dargestellten Luftmisch- und -verteilerklappe,
- Fig. 23: eine vereinfachte nicht beanspruchte, ausschnittsweise geschnittene Darstellung einer Kraftfahrzeug-Heizungs- und Klimaanlage gemäß einem weiteren Ausführungsbeispiel im Bereich der kombinierten Luftmisch- und -verteilerklappe in einer Stellung "50% Defrost - 50% Fußraum",
- Fig. 24: eine schematische Darstellung des Regelzusammenhangs zwischen der Luftverteilung auf die einzelnen Luftkanäle zu den Ausströmern bzw. der Temperatur und der Stellung des Bedienelements bei der in Fig. 23 dargestellten Luftmisch- und -verteilerklappe,
- Fig. 25: eine perspektivische Darstellung einer kombinierten Luftmisch- und -verteilerklappe,
- Fig. 26: eine perspektivische Darstellung einer anderen, besonders bevorzugten kombinierten Luftmisch- und -verteilerklappe, und
- Fig. 27: eine perspektivische Darstellung einer weiteren kombinierten Luftmisch- und -verteilerklappe.

Eine Kraftfahrzeug-Heizungs- und Klimaanlage 1 gemäß dem ersten bis dritten Ausführungsbeispiel weist ein Gebläse, einen Verdampfer, einen Heizer und eine kombinierte Luftmisch- und -verteilerklappe 2 auf, die in einem in der Zeichnung stark vereinfacht ausschnittsweise dargestellten, mehrteilig ausgebildeten Luftführungsgehäuse 3 angeordnet ist. Im Luftführungsgehäuse 3 sind fünf Luftkanäle ausgebildet, nämlich für die Zuführung der warmen, vom Heizer kommenden Luft (Warmluftkanal W), für die Zuführung der kalten, direkt vom Verdampfer über einen Bypass vorbei am Heizer geleiteten Luft (Kaltluftkanal K), für die Weiterleitung der gemischten, temperierten Luft zur Belüftung des Innenraums (Belüftungskanal B), für die Weterleitung der gemischten, temperierten Luft zum Fußraum (Fußraumkanal F) und für die Weiterleitung der warmen Luft zum Entfrosten der Windschutzscheibe (Defrostkanal D). Im Folgenden wird auf den Warmluft- und den Kaltluftkanal auch als zuführende Luftkanäle und auf die drei anderen Luftkanäle auch als weiterführende Luftkanäle Bezug genommen. Insbesondere die ersten zwei Ausführungsbeispiele sind rein beispielhafter Natur und dienen im Wesentlichen dem besseren Verständnis der Funktion.

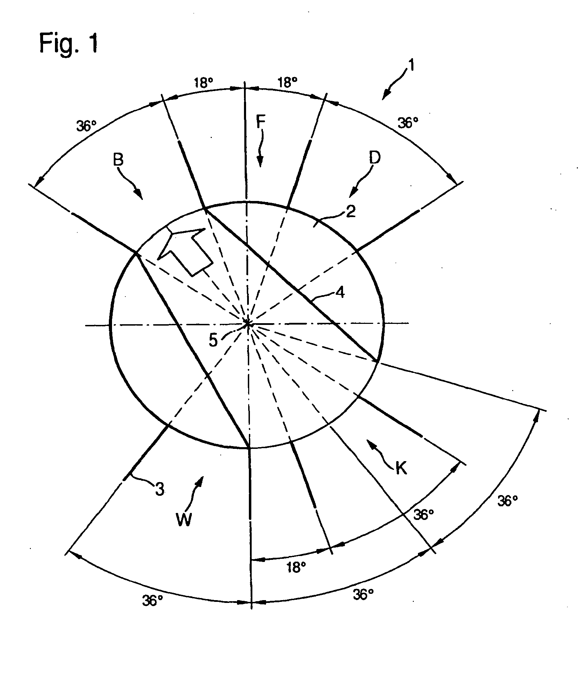

Gemäß dem ersten Ausführungsbeispiel sind die Öffnungen aller Luftkanäle im Bereich der Luftmisch- und -verteilerklappe 2 jeweils in einem 36°-Winkel ausgebildet. Die Öffnungen des Warmluftkanals W und des Kaltluftkanals K sind voneinander 18° beabstandet, d.h. die Eintrittstrennung beträgt vorliegend 18°. Wie aus Fig. 1 ersichtlich, ist die Mitte des Fußraumkanals F diagonal gegenüberliegend der kaltluftkanalseitigen Seitenwand des Warmluftkanals W angeordnet. Die Öffnungen der drei Luftkanäle B, F und D sind in direkter Nachbarschaft voneinander angeordnet, wobei der Fußraumkanal F mittig zwischen den anderen Luftkanälen B und D angeordnet ist. Wird jeweils die Mittelachse der Gruppen der zuführenden Luftkanäle und der weiterführenden Luftkanäle genommen, so sind diese Mittelachsen in einem Winkel von 9° zueinander versetzt angeordnet. Auf diesen Versatz wird auch als Asymmetrie Bezug genommen.

Die Klappe 2 weist äußere Klappenflächen, welche die Gestalt von Teilbereichen eines Zylinders aufweisen, und zwei vorliegend zumindest auf der Luftströmungsseite vollständig eben ausgebildete, innere Klappenflächen 4 auf, die in Luftströmungsrichtung aufeinander zulaufend angeordnet sind. Der Öffnungswinkel der inneren Klappenflächen 4 beträgt vorliegend 20°. Die Drehachse 5 der Klappe 2 ist zentral zwischen den inneren Klappenflächen 4 angeordnet.

Die inneren Klappenflächen 4 können gemäß einer nicht in der Zeichnung dargestellten Variante der Klappe auch auf einer oder beiden Seiten entfallen.
Fig. 1 zeigt die Stellung der Klappe 2" 100% Belüftung", wobei ausschließlich Kaltluft vom Kaltluftkanal K dem Belüftungskanal B zugeführt wird. Die anderen Kanäle W, F und D sind durch die zylindrische Außenfläche der Klappe 2 abgesperrt.

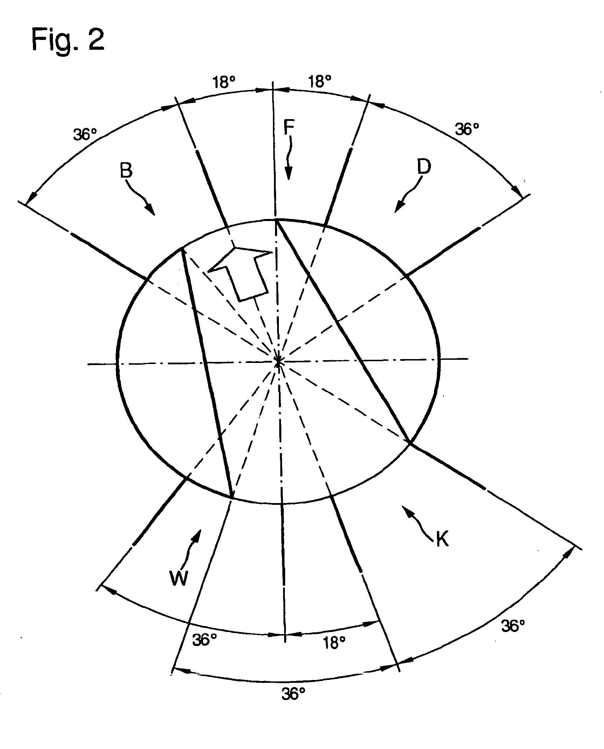

Fig. 2 zeigt die Klappe 2 in einer Stellung "50% Belüftung und 50% Fußraumbelüftung". Hierbei ist 100% der Öffnung des Kaltluftkanals K und ca. 50% der Öffnung des Warmluftkanals W von der Klappe 2 freigegeben, so dass sich automatisch eine Mischtemperatur ergibt.

Im Falle der Stellung "100% Fußraumbelüftung" ist die Öffnung des Warmluftkanals W vollständig frei, während die Öffnung des Kaltluftkanals K zu 50% verdeckt ist, so dass sich wiederum eine Mischtemperatur ergibt, die jedoch über der vorstehend genannten Mischtemperatur in der Stellung "50% Belüftung und 50% Fußraumbelüftung" liegt.

In einer Stellung "50% Fußraumbelüftung und 50% Defrostbetrieb" wird ausschließlich Warmluft dem Fußraumkanal F und dem Defrostkanal D zugeführt. Der Kaltluftkanal K ist vollständig abgesperrt. Entsprechendes gilt auch für die Stellung "100% Defrostbetrieb", so dass ausschließlich Warmluft zum Entfrosten der Windschutzscheibe verwendet wird.

Auf Grund des Vorsehens einer einzigen Klappe 2 zur Mischung der vom Kaltluftkanal K und Warmluftkanal W kommenden Luft sowie der Luftverteilung der entsprechend der Klappenstellung temperierten Luft auf die einzelnen Luftkanäle, welche fest mit der Temperierung der Luft gekoppelt ist, ist nur ein einziges Bedienelement für die Regelung der Temperatur und der Luftverteilung erforderlich, d.h. eines der bislang üblichen Bedienelemente kann entfallen. Die Gebläsestärke wird unabhängig von der Temperatur und Luftverteilung über ein zweites Bedienelement geregelt.

Der Aufbau der Kraftfahrzeug-Heizungs- und Klimaanlage 1 samt Luftmisch- und -verteilerklappe 2 gemäß dem zweiten Ausführungsbeispiel entspricht - abgesehen von der Anordnung des Kaltluftkanals K - dem des ersten Ausführungsbeispiels, so dass im Folgenden nur auf die Unterschiede näher eingegangen wird. In der Zeichnung sind gleiche oder gleichwirkende Elemente mit den gleichen Bezugszeichen versehen, wie bei dem ersten Ausführungsbeispiel. Die weiterleitenden Luftkanäle B, D, F sind entsprechend dem ersten Ausführungsbeispiel angeordnet. Ebenfalls ist wiederum die kaltluftkanalseitige Wand des Warmluftkanals W der Mitte des Fußraumkanals F direkt gegenüberliegend angeordnet.

Der Warmluftkanal W und der Kaltluftkanal K sind gemäß dem zweiten Ausführungsbeispiel voneinander durch einen Winkel von 36° getrennt (Eintrittstrennung 36°). Die Asymmetrie der zuführenden und weiterleitenden Luftkanäle beträgt gemäß dem zweiten Ausführungsbeispiel 18°.

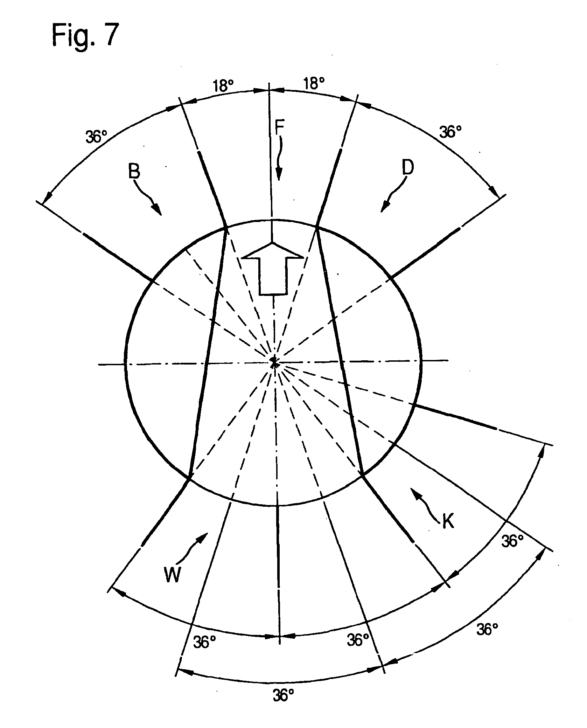

Diese Winkelanordnung hat den Vorteil, dass in der Stellung 100% Fußraumbelüftung, wie in Fig. 7 dargestellt, ausschließlich Luft vom Warmluftkanal W dem Fußraumkanal F zugeführt wird. Der Kaltluftkanal K ist geschlossen.

In der Stellung 100% Defrostbetrieb wird gemäß diesem Ausführungsbeispiel, wie auch gemäß dem ersten Ausführungsbeispiel, ausschließlich Warmluft vom Warmluftkanal W der Defrostdüse zugeführt, so dass auch in diesem Fall ein schnelles Entfrosten sichergestellt werden kann.

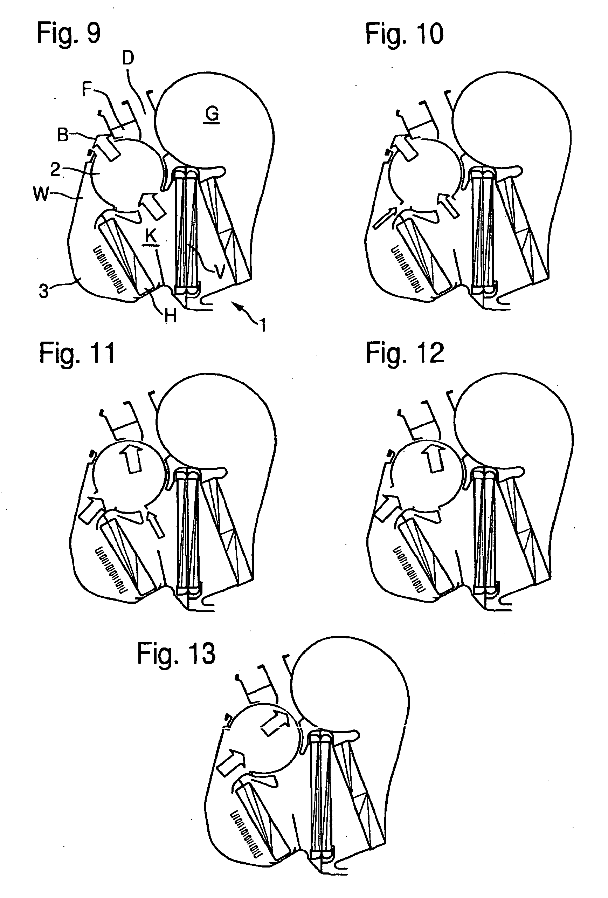

In den Figuren 9 bis 13 ist ein drittes Ausführungsbeispiel einer Kraftfahrzeug-Heizungs- und Klimaanlage 1 mit einer Luftmisch- und -verteilerklappe 2 dargestellt. Die Anlage 1 weist ein Gebläse G, einen Verdampfer V, einen Heizer H und besagte kombinierte Luftmisch- und -verteilerklappe 2 auf, die in mehrteilig ausgebildeten Luftführungsgehäuse 3 angeordnet ist. Im Luftführungsgehäuse 3 sind wiederum fünf Luftkanäle ausgebildet, nämlich für die Zuführung der warmen, vom Heizer kommenden Luft (Warmluftkanal W), für die Zuführung der kalten, direkt vom Verdampfer über einen Bypass vorbei am Heizer geleiteten Luft (Kaltluftkanal K), für die Weiterleitung der gemischten, temperierten Luft zur Belüftung des Innenraums (Belüftungskanal B), für die Weiterleitung der gemischten, temperierten Luft zum Fußraum (Fußraumkanal F) und für die Weiterleitung der warmen Luft zum Entfrosten der Windschutzscheibe (Defrostkanal D).

Im Unterschied zu den vorigen Ausführungsbeispielen sind die Öffnungswinkel der einzelnen Luftkanäle unterschiedlich. Vorliegend weist in der dargestellten Schnittebene der Warmluftkanal W einen Öffnungswinkel von ca. 85°, der Kaltluftkanal K einen Öffnungswinkel von ca. 50°, der Belüftungskanal B einen Öffnungswinkel von 35°, der Fußraumkanal F einen Öffnungswinkel von ca. 25° und der Defrostkanal D einen Öffnungswinkel von ca. 48° auf. Der Warm- und Kaltluftkanal sind um einen Winkel von ca. 45° voneinander beabstandet.

Ferner weist die Klappe 2 im Bereich der Luftanströmseite nach außen ragende Anschläge auf, welche den Drehbereich der Klappe 2 in Zusammenwirkung mit Anschlägen am Luftführungsgehäuse auf den Seiten des Warm- und Kaltluftkanals begrenzen. Gemäß einer Variante entfallen diese Anschläge, so dass eine Drehwinkelbegrenzung vorgesehen ist. Die Dichtfunktion, welche auch durch die Anschläge übernommen wird, insbesondere um ein Überströmen von Kalt- oder Warmluft in den anderen insbesondere um ein Überströmen von Kalt- oder Warmluft in den anderen zuführenden Kanalbereich zu verhindern, wird in diesem Fall beispielsweise durch elastische Dichtlippen am Außenumfang der Klappe erfüllt.

Figur 9 zeigt die Betriebsstellung "Belüftung 100% kalt", d.h. ausschließlich direkt vom Verdampfer V kommende Luft wird dem Belüftungskanal B zugeführt. Die Öffnung des Warmluftkanals W ist vollständig durch eine äußere Klappenfläche der Klappe 2 verschlossen. Wird die Klappe 2 gemäß den Darstellungen in der Zeichnung im Uhrzeigersinn gedreht, so schließt sich langsam der Kaltluftkanal K und der Warmluftkanal W beginnt sich zu öffnen, so dass in einer Stellung, wie sie in Fig. 10 dargestellt ist, eine temperierte Belüftung des Fahrzeuginnenraums erfolgt. Wird die Klappe 2 weiter gedreht, so schließt sich der Belüftungskanal B allmählich vollständig, während sich der Fußraumkanal F langsam öffnet, wobei sowohl kalte als auch warme Luft zum Fußraumkanal F gelangt (siehe Fig. 11). In der Stellung von Fig. 12 ist der Kaltluftkanal K vollständig geschlossen, so dass ausschließlich Warmluft zum Fußraumkanal F gelangt. Fig. 13 zeigt die andere Endstellung der Klappe 2 gemäß dem vorliegenden Ausführungsbeispiel, in welcher der Warmluftkanal W vollständig geöffnet ist und die gesamte warme Luft zum Entfrosten verwendet wird, also zum Defrostkanal D geleitet wird.

Obwohl vorstehend nicht näher beschrieben, können in der Klappe auch an den Stirnflächen Öffnungen sowie im entsprechenden Bereich des Luftführungsgehäuses Luftkanäle vorgesehen sein, so dass die Regelung weiterer Luftkanäle möglich ist, beispielsweise für Luftkanäle, die dem Fondbereich zugeordnet sind.

Im Unterschied zu den vorstehen beschriebenen Ausführungsbeispielen können die inneren Klanpenflächen auch parallel oder in Strömungsrichtung auseinanderlaufend angeordnet sein. Die inneren Klappenflächen können auch durch die Innenmantelflächen der Zylinderbereiche gebildet sein, welche die Klappe bilden, so dass eine sehr kostengünstige und materialsparende Ausgestaltung der Klappe ermöglicht wird. Beliebige andere gekrümmte Verläufe der inneren Klappenflächen sind möglich. Natürlich sind auch Mischformen möglich, d.h. beispielsweise kann auch nur eine der Seiten gekrümmt, die andere eben ausgebildet sein.

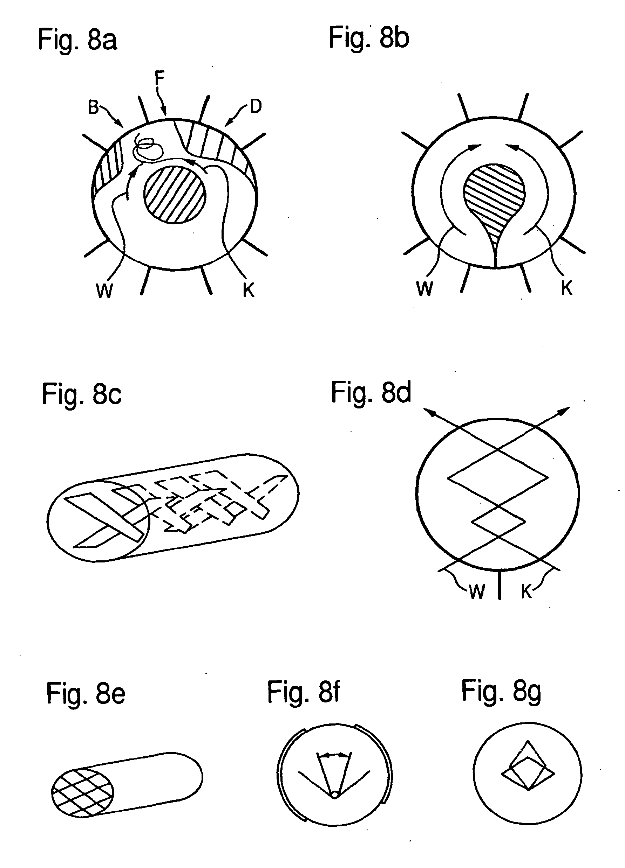

An den inneren Klappenflächen können sowohl gemäß dem ersten als auch gemäß dem zweiten und dritten Ausführungsbeispiel Kanalstrukturen ausgebildet und/oder an den Klappenflächen und/oder im Innenraum der Klappe Luftleitelemente oder Verdrängungskörper (starr, flexibel oder verschwenkbar) angeordnet sein, wie in den Figuren 8a bis 8g skizziert, welche den Verlauf des Luftstroms durch die Klappe verändern. Als Verdrängungskörper kommen beispielsweise kreisförmige Körper (siehe Fig. 8a), die mittig oder außermittig angeordnet sind, tropfenförmige Strömungskörper (siehe Fig. 8b), schräg angeordnete Leitschaufeln oder sonstige Turbulenzerzeuger, beispielsweise gekreuzt angeordnete Bleche entlang der Mittellängsachse (siehe Fig. 8c), Strukturen mit mehrfacher, sich kreuzender Umlenkung (siehe Fig. 8d) in Frage. Beispielsweise durch Turbulenzerzeuger kann eine bessere Vermischung der Kalt- und Warmluft dadurch bewirkt werden. Die Verdrängungskörper können starr sein. Alternativ können die Verdrängungskörper flexibel sein, wobei sie beispielsweise elastische Wände aufweisen, die sich unter Innendruck verformen (siehe Fig. 8g), über mechanische Elemente oder temperaturabhängig verformt werden (Dehnstoffelement, Bimetall, Memorymetall). Im Innenraum kann ferner eine Schaumstruktur (offenzellig oder Gitterstruktur (siehe Fig. 8e)), um die Vermischung zu optimieren.

Die Luftleitelemente oder Verdrängungskörper können auch beweglich angeordnet sein, beispielsweise durch Nocken oder Kurvenbahnen gesteuert oder separat angetrieben werden. Es sind beliebige Bewegungen möglich, beispielsweise Schwenkbewegungen, lineare Verschiebungen oder beliebige Kurvenbahnen. Die Bewegungen können auch in axialer Richtung oder mit axialem Anteil vorgesehen sein. Ebenfalls können Klappen im Innenraum der Klappe angeordnet sein, wie in Fig. 8f dargestellt. Hierbei können auch zwei Klappenflächen V-förmig angeordnet sein, welche beispielsweise starr um eine gemeinsame Schwenkachse verschwenkbar sind, oder welche sich in Abhängigkeit der Strömungsgeschwindigkeit und/oder des Anströmwinkels der Luft in ihrer Winkelstellung zueinander ändern.

Ebenfalls kann, beispielsweise durch Leitschaufeln oder schaufelförmige Einbauten, wie in Fig. 8c dargestellt, auch eine gezielte, sich kreuzende Strömung erzielt werden, so dass beispielsweise in einer Stellung 50% Belüftung und 50% Fußraum vermehrt warme Luft zum Fußraum und vermehrt kalte Luft zur Belüftung geführt wird, so dass auch eine Temperaturschichtung, d.h. im Gesichtsbereich der Insassen kühlere Luft als im Fußraum, möglich wird.

Die Einbauten können sowohl fest in der Klappe, d.h. sie drehen sich entsprechend der Drehung der Klappe mit, als auch fest im Luftführungsgehäuse angeordnet sein, d.h. sie bleiben stets in der gleichen Stellung, während sich die Klappe um die Einbauten dreht. Ebenfalls sind Getriebeübersetzungen für unterschiedliche Drehbewegungen von Klappe und Einbauten möglich.

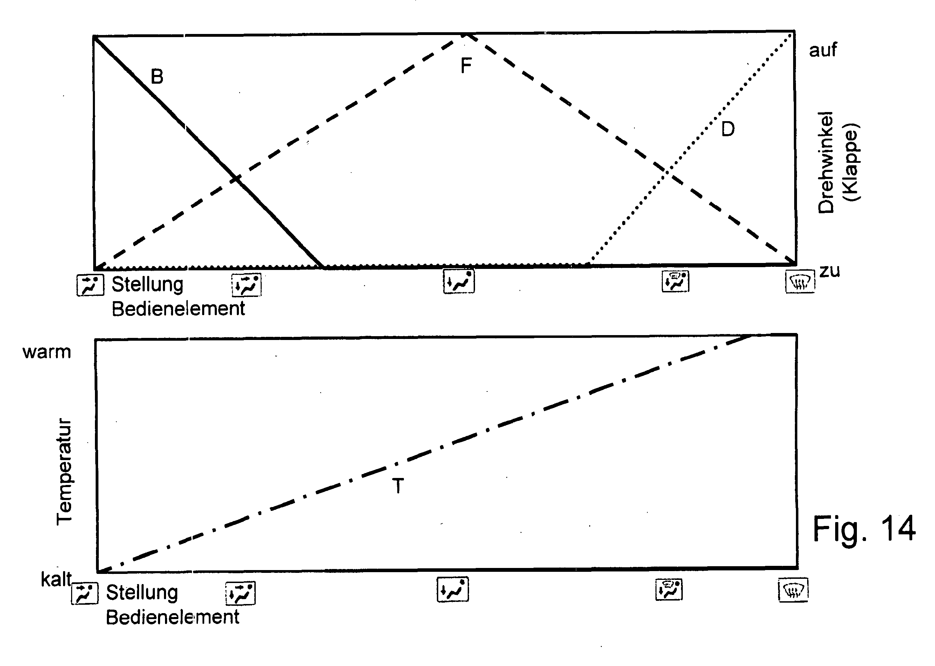

Der Zusammenhang einer Regelung von Temperatur und Klappenstellung im Falle einer kombinierten Luftmisch- und -verteilerklappe, wie sie zuvor beschrieben wurde, ist in Fig. 14 schematisch beispielhaft dargestellt. Wie aus der Figur 14, in welcher im oberen Teil der Drehwinkel der Klappe über der Bewegung des entsprechenden Bedienelements und im unteren Teil die Temperatur T über der Bewegung des entsprechenden Bedienelements dargestellt ist, ersichtlich ist, ist in der links dargestellten Stellung des Bedienelements, welche der Stellung 100% Belüftung entspricht, die Temperatur minimal. In dieser Stellung erfolgt die Luftzufuhr ausschließlich über den Belüftungskanal B. Sämtliche anderen Luftkanäle D und F sind geschlossen. Wird das Bedienelement verschoben (oder ggf. auch gedreht), so schließt langsam die Öffnung zum Belüftungskanal B und die Öffnung zum Fußraumkanal F öffnet sich entsprechend. Hierbei ist - gemäß der vorliegenden Darstellung des Funktionsdiagramms - der Belüftungskanal B geschlossen bevor der Fußraumkanal F vollständig geöffnet ist. Im durch das entsprechende Icon bezeichneten Zustand 100% Fußraum liegt die Temperatur vorliegend in einem mittleren Bereich und die Luft strömt ausschließlich in den Fußraum. Wird das Bedienelement weiter in die gleiche Richtung weiter verschoben (bzw. gedreht), so schließt langsam die Öffnung zum Fußraum und, nachdem die Öffnung bereits teilweise geschlossen ist, öffnet sich langsam die Öffnung zum Defrostkanal D. In der Endstellung ist der Defrostkanal D vollständig geöffnet und der Fußraumkanal F vollständig geschlossen. In dieser Endstellung ist zudem die Temperatur maximal warm, d.h. die gesamte Heizleistung und der gesamte Luftmassenstrom stehen für ein Defrosten der Windschutzscheibe zur Verfügung.

Bei dem Vorsehen einer "starren" Regelung, wie sie gemäß einer der vorstehend beschriebenen Luftmisch- und -Verteilerklappen 2 erfolgt, hat den Nachteil, dass die sich in einer Klappenstellung ergebende Temperatur abhängig von der Außenlufttemperatur, der Kühlwassertemperatur u.ä. ist, so dass die Temperatur einer Klappenstellung nicht exakt konstant ist.

Um derartige Temperaturabweichungen bei einer Stellung zu vermeiden, können gemäß einer verbesserten Ausführungsform temperaturabhängige Elemente, vorliegend ein Bimetall oder eine Memorylegierung (mit Zweiwegmemoryeffekt), in die Luftmisch- und -Verteilerklappe und/oder deren Antrieb integriert sein oder bspw. in Gestalt einer Klappe oder eines Luftleitelements vorgesehen sein, welche die Temperatur - ohne manuelles. Nachregeln oder aufwändige Regelungstechnik - in den einzelnen Luftkanälen sofern keine Veränderung des Regelelements erfolgt, konstant hält. Dies kann durch Änderung der Zusammensetzung von kalter und warmer Luft und/oder durch Veränderung des Strömungsverlaufs im Inneren der Luftmisch- und -Verteilerklappe und/oder durch Änderung der Luftverteilung erfolgen. Im Bereich von Ausströmern ist die Verwendung von Steuerorganen aus Bimetall bspw. aus der DE 37 17 676 C2 (Biegebewegung) oder von Memorylegierungen aus der DE 103 62 008 B4 (Drehbewegung) bekannt. Hierbei kann bspw. auch eines der oben genannten Luftleitelemente oder Verdrängungskörper aus einem entsprechenden Material bestehen.

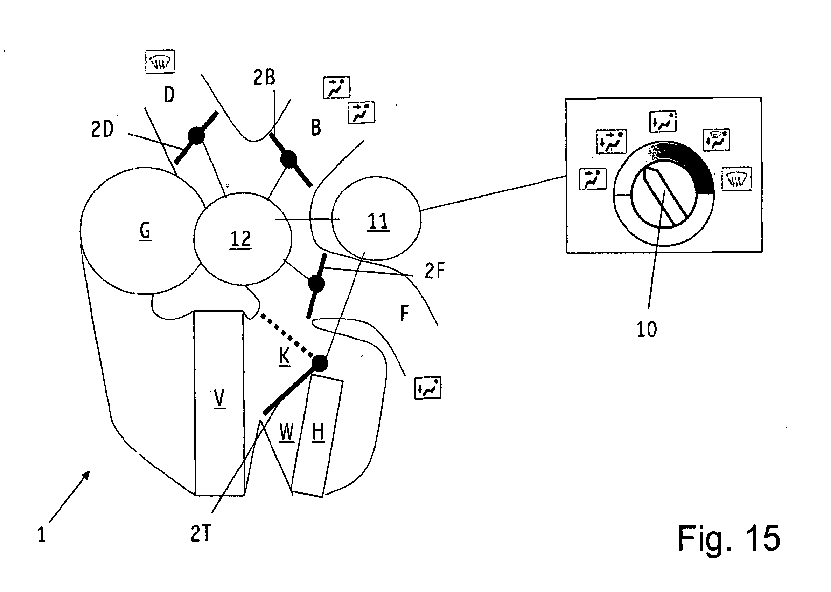

Im Folgenden wird unter Bezugnahme auf Fig. 15 ein Beispiel näher erläutert, anhand dessen die Funktion des Bedienelements sowie einer Möglichkeit einer normalen Einstellung einzelner Klappen, d.h. getrennt ausgebildeter Temperaturmisch- und Verteilerklappen beschrieben ist. Für einen Fachmann ist es jedoch selbstverständlich, dass eine einzige erfindungsgemäße Luftmisch- und Verteilerklappe die Funktion der hier getrennt ausgebildeten Klappen übernehmen kann. Ebenso können gegebenenfalls Teilfunktionen, wie beisipelsweise die Aufteilung eines gemeinsamen Luftstroms für den Fußraum und den Defrostbetrieb, durch einzelne, zusätzlich zu einer Luftmisch- und Verteilerklappe vorgesehene Klappen realisiert werden.

Ein Bedienelement 10, dessen dargestellte Stellung nicht der Klappenstellung entspricht, zur Regelung der Temperatur im Fahrzeuginnenraum und der Luftverteilung auf die Luftkanäle B, D, F ist vorliegend über eine rein mechanisch ausgebildete Koppelkinematik 11 sowohl mit einer Temperatur- oder Luftmischklappe 2T, welche der Luftverteilung der vom Gebläse G kommenden Luft auf den Kaltluftkanal K und Warmluftkanal W dient, als auch mit einer Modus- und Modekinematik 12 verbunden, welche jeweils mit Verteilerklappen 2B, 2D und 2F verbunden ist, d.h. welche die Luftverteilung auf die einzelnen Luftkanäle B, D, F regelt. Die Regelung ist hierbei derart ausgelegt, dass einer mittels des Bedienelements 10 eingestellten Temperatur bestimmte Klappenstellungen entsprechen. Hierbei ist vorliegend bei 100% warm ein reiner Defrostbetrieb vorgesehen, d.h. nur die Verteilerklappe 2D ist geöffnet, während bei 100% kalt ein reiner Belüftungsbetrieb vorgesehen ist, d.h. nur die Verteilerklappe 2B ist geöffnet. Wird - ausgehend von 100% kalt die Temperatureinstellung des Bedienelements 10 erhöht, so wird allmählich die Verteilerklappe 2F geöffnet während die Verteilerklappe 2B allmählich geschlossen wird, d.h. Luft gelangt sowohl in den Belüftungskanal B als auch in den Fußraumkanal F. In einem mittleren Temperaturbereich ist vorliegend ausschließlich die Verteilerklappe 2F geöffnet, d.h. die gesamte relativ warme Luft wird zum Fußraum geleitet. Wird die Temperatureinstellung weiter erhöht, so wird allmählich die Verteilerklappe 2D geöffnet während die Verteilerklappe - 2F langsam geschlossen wird. Erfolgt eine weitere Erhöhung der eingestellten Temperatur, so schließt die Verteilerklappe 2F und nur noch die Verteilerklappe 2D ist geöffnet, d.h. die gesamte, maximal erwärmte Luft steht zum Entfrosten der Windschutzscheibe zur Verfügung.

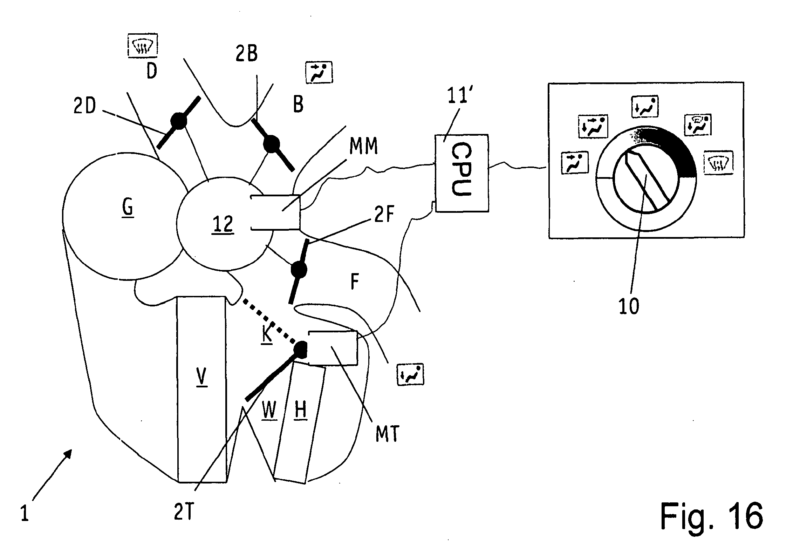

In Fig. 16 ist als weiteres Beispiel eine - soweit nachfolgend nicht abweichend beschrieben - entsprechend dem zuvor beschriebenen Beispiel ausgebildete Kraftfahrzeug-Heizungs- und Klimaanlage 1 vorgesehen, wobei wiederum ein Bedienelement 10 (dargestellte Stellung entspricht nicht der dargestellten Klappenstellung) für die Veranlassung von Stellbewegungen der Luftmisch- und -verteilerklappen 2T, 2B, 2D, 2F vorgesehen ist. Dieses Bedienelement 10 ist hierbei jedoch mit einer elektronischen Einheit 11' gekoppelt, welche ihrerseits die vom Bedienelement 10 empfangenen Signale in entsprechende Signale umwandelt, welche über elektrische Leitungen an zwei elektrische Schrittmotoren MT und MM weitergeleitet werden. Diese elektrischen Schrittmotoren MT und MM veranlassen bei einer Änderung der Stellung des Bedienelements 10 entsprechende Stellbewegungen der einzelnen Klappen 2T, 2B, 2D, 2F. Hierbei veranlasst der Schrittmotor MT die Stellbewegung der Luftmischklappe 2L und der Schrittmotor MM die Stellbewegungen der Verteilerklappen 2B, 2D und 2F, d.h. die Verteilerklappen sind über eine Modekinematik 12, welche im Prinzip derjenigen des ersten Ausführungsbeispiels entspricht, miteinander gekoppelt.

Alternativ können auch drei Schrittmotoren für die drei Verteilerklappen vorgesehen sein, so dass eine mechanische Kopplung entfallen kann.

Auch in diesem Fall können Bimetalle oder Memorylegierungen zum Temperaturausgleich verwendet werden.

So kann gemäß einer nicht in der Zeichnung dargestellten Ausführungsform ein Bimetall-Teil kann hierbei als Hebel oder ein anderes betätigendes Bauteil vorgesehen sein, welcher das Übersetzungsverhältnis der Temperatur- oder Luftmischklappe 2T verändert.

Alternativ oder in Verbindung hiermit kann eine Klappe aus einem Bimetall gefertigt sein, welche sich temperaturabhängig verformt, so dass beispielsweise bei bestimmten Temperaturen die Öffnung freigegeben wird, obwohl die Öffnung bei der entsprechenden Stellung des Bedienelements und bei "normaler" Temperatur des Verdampfers/Heizers die Öffnung verschlossen sein sollte.

Optimal ist eine Auslegung einer oder mehrerer Luftmischklappen, die sicherstellt, dass - unabhängig von der Außentemperatur, der Temperatur von Verdampfer und Heizer - die über das Bedienelement gewählte Temperatur unter Unterstützung durch die Funktion des Bimetalls oder der Memorylegierung möglichst genau im Mischbereich, also vor den Verteilerklappen, vorliegt.

Beispielhafte Anwendungen von Bimetallen oder ggf. auch Memorylegierungen sind die Verwendung eines entsprechenden sich temperaturabhängig verhaltenden Materials im Bereich eines Teilstücks einer Kurvenscheibe, so dass der Bewegungsablauf für die über diese Kurvenscheibe geregelte Klappe geändert wird, die Verwendung eines entsprechenden sich temperaturabhängig verhaltenden Materials in einem Bereich, so dass der Drehpunkt einer Kurvenscheibe oder einer Klappe verlagert werden kann (z.B. über einen Exzenter), die Verwendung eines entsprechenden sich temperaturabhängig verhaltenden Materials im Bereich eines Hebelarms, um die Hebelarmlänge und/oder die Winkelausrichtung des Hebelarms zu verändern, die Verwendung eines entsprechenden sich temperaturabhängig verhaltenden Materials in einem Bereich, um Torsionen hervorzurufen, oder die Verwendung eines entsprechenden sich temperaturabhängig verhaltenden Materials in einem Bereich, um Federkräften innerhalb der Kinematik entgegen zu wirken. Im Extremfall ist auch eine rein thermische Regelung einer Klappe möglich.

Bei einer Heizungs- und Klimaanlage kann gemäß einem nicht in der Zeichnung dargestellten weiteren Ausführungsbeispiel eine elektrische Kopplung zwischen dem Bedienelement und einer Koppelkinematik (vgl. viertes Ausführungsbeispiel) sowie eine mechanische Kopplung zwischen der Koppelkinematik und der Modekinematik sowie der Temperaturklappe über Bowdenzüge und Wellen vorgesehen sein.

Gemäß einem nicht in der Zeichnung dargestellten Ausführungsbeispiel ist eine wasserseitig geregelte Heizungs- und Klimaanlage vorgesehen, bei welcher der gesamte vom Gebläse kommende Luftstrom sowohl den Verdampfer als auch den Heizer durchströmt, d.h. es ist kein Kaltluftbypass vorgesehen. Die Regelung der Temperatur erfolgt durch die Regelung der Wassertemperatur im Heizer. Bei einer derartigen Anordnung ist nur ein zuführender Luftkanal vorgesehen. Die durch diesen Luftkanal strömende Luft wird auf drei weiterführende Luftkanäle (Belüftung, Defrost, Fußraum) bedarfsgerecht verteilt, wobei die Regelung mittels herkömmlicher Klappen erfolgt. Regelungstechnisch sind die Regelung der Temperatur des Heizers und die Regelung der Klappenstellungen der Klappen zur Verteilung der Luft auf die drei weiterführenden Luftkanäle miteinander derart verbunden, dass einer Solltemperatur der dem Fahrzeuginnenraum zuzuführenden Luft eine bestimmte Luftverteilung auf die einzelnen Ausströmer vorgesehen ist, so dass entsprechend den vorigen Ausführungsbeispielen wiederum nur ein Bedienelement für die Temperatur und Luftverteilung vorgesehen ist.

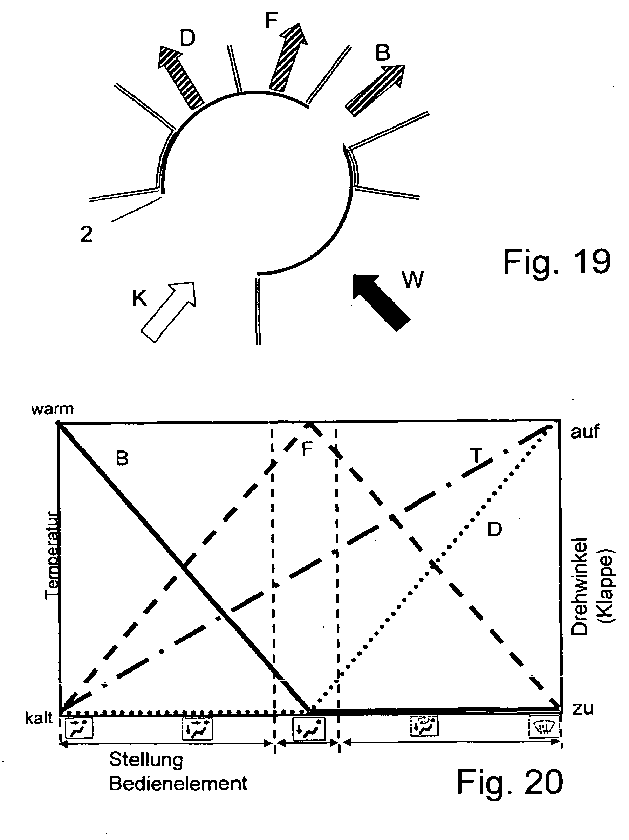

In den Figuren 19 und 20 ist ein weiteres Ausführungsbeispiel einer kombinierten Luftmisch- und -verteilerklappe einer Kraftfahrzeug-Heizungs- und Klimaanlage dargestellt. Fig. 19 zeigt die kombinierten Luftmisch- und -verteilerklappe 2 in der Stellung 100% Belüftung, wobei vorliegend ausschließlich vom Kaltluftkanal K kommende Luft dem Belüftungskanal B zugeführt wird (entspricht der Stellung ganz links in Fig. 20). Wird die Klappe langsam entgegen dem Uhrzeigersinn gedreht, so verschließt allmählich die Luftmisch- und -verteilerklappe 2 die Öffnung des Belüftungskanals B und die Öffnung des direkt hieran angrenzenden Fußraumkanals F wird allmählich freigegeben, bis in der maximal geöffneten Stellung des Fußraumkanals F der Belüftungskanal B (und auch der Defrostkanal D) vollständig von der Luftmisch- und -verteilerklappe. 2 verschlossen sind. Entsprechend schließt die Luftmisch- und -verteilerklappe 2 auch allmählich die Öffnung des Kaltluftkanals K und die Öffnung des direkt hieran angrenzenden Warmluftkanals W wird geöffnet. In die Stellung 100% Fußraumbelüftung ist die Einlassöffnung der Luftmisch- und -verteilerklappe 2 so weit gedreht, dass ca. 50% Warm- und 50% Kaltluft miteinander in der Luftmisch- und -verteilerklappe 2 vermischt werden und zum Fußraumkanal F gelangen. Wird die Luftmisch- und -verteilerklappe 2 weiter entgegen dem Uhrzeigersinn gedreht, so schließt allmählich die Öffnung zum Fußraumkanal F und die Öffnung zum Defrostkanal D wird freigegeben. Ferner schließt allmählich die Öffnung zum Kaltluftkanal K und die Öffnung zum Warmluftkanal W wird weiter freigegeben, bis in der Endstellung des Bedienelements (und der Luftmisch- und -verteilerklappe 2) der Warmluftkanal W vollständig freigegeben ist und die gesamte warme Luft zum Defrostkanal D gelangt. Wie aus der Darstellung von Fig. 20 ersichtlich, ist vorliegend über den gesamten Bereich ein linearer Zusammenhand zwischen dem Drehwinkel der Luftmisch- und -verteilerklappe 2 und der Temperatur T am entsprechenden Luftkanal (B, D, F) gegeben.

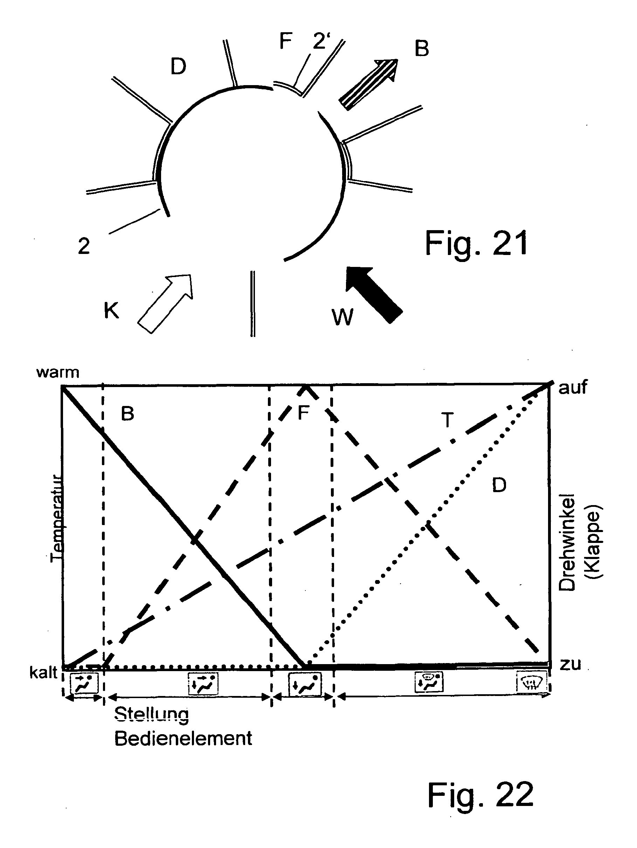

Gemäß einem weiteren Ausführungsbeispiel, das in den Figuren 21 und 22 dargestellt ist, ist die Luftmisch- und -verteilerklappe 2 dahingehend leicht abgewandelt, dass eine Versperrung 2' oder Abdeckung des Fußraumkanals F im Bereich dessen Eintrittsöffnung vorgesehen ist, welche sich ausgehend von der Trennwand zum benachbarten Belüftungskanal B über einen Teil der Öffnung erstreckt. Diese Abdeckung hat zur Folge, dass die Luft erst verspätet in den Fußraumkanal F eintritt, wobei bei Eintritt die Luft eine - verglichen mit dem zuvor beschriebenen Ausführungsbeispiel - etwas erhöhte Temperatur aufweist. Dies spiegelt sich in einem in Fig. 22 links unten angeordneten waagerechten Verlauf der Luftmenge, welche dem Fußraum F zugeführt wird. Entsprechend steigt der Verlauf der dem Fußraum zugeführten Luftmenge im nachfolgenden Bereich steiler an. Die weitere Funktion entspricht derjenigen des zuvor beschriebenen Ausführungsbeispiels, so dass hierauf nicht näher eingegangen wird.

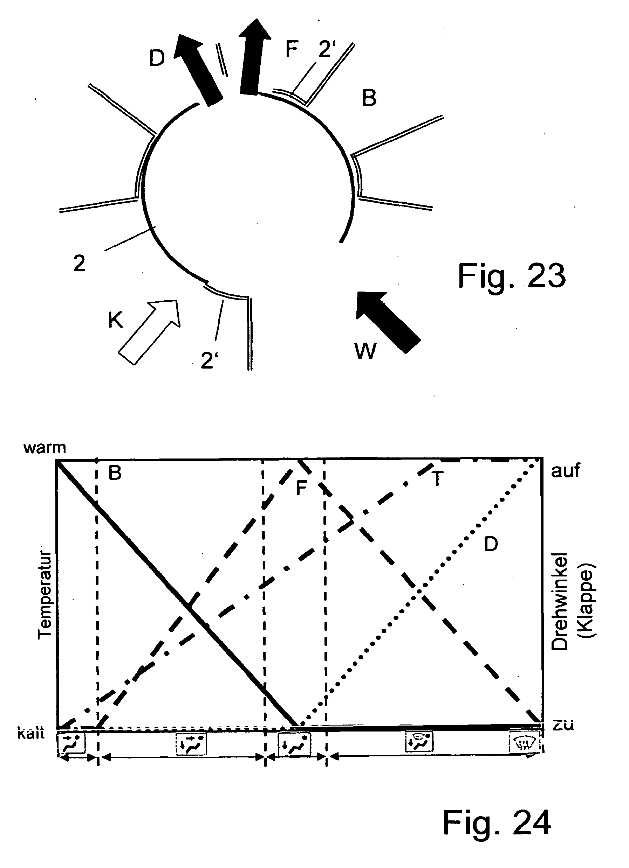

Figuren 23 und 24 zeigen ein weiteres Ausführungsbeispiel, welches sich vom Ausführungsbeispiel der Figuren 21 und 22 dadurch unterscheidet, dass die Luftmisch- und -verteilerklappe 2 zusätzlich eine Versperrung 2' oder Abdeckung im Bereich der Austrittsöffnung des Kaltluftkanals K aufweist, welche sich dadurch bemerkbar macht, dass die maximale Temperatur früher erreicht wird, d.h. dass bereits im Zustand 50% Belüftung und 50% Defrost die maximale Temperatur T erreicht wird, welche bis zum Betriebszustand 100% Defrost beibehalten wird (siehe waagerechter Verlauf der Temperatur im rechten Teil von Fig. 24).

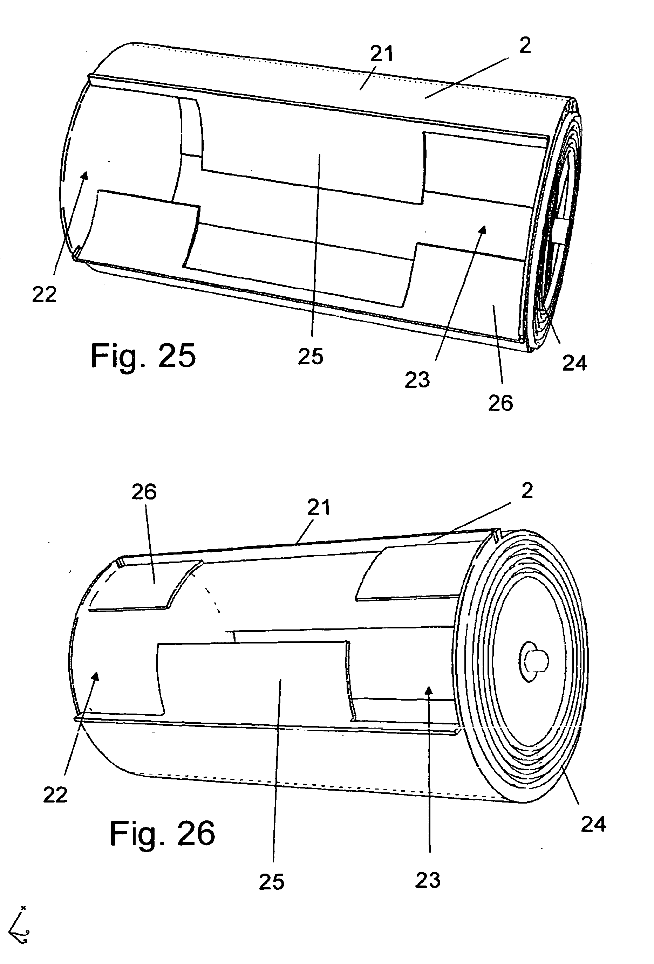

In den Figuren 25 bis 27 sind verschiedene Bauformen kombinierten Luftmisch- und -verteilerklappen 2 dargestellt, wobei die Bauform von Fig. 26 besonders bevorzugt ist.

Die kombinierte Luftmisch- und -verteilerklappe 2 von Fig. 25 weist einen hohlzylindrischen Bereich 21, der ca. 240 mm lang ist, mit zwei sich über die ganze Länge erstreckenden Öffnungen 22, 23 auf, der endseitig durch zwei kreisförmige Bereiche 24 verschlossen ist. Hierbei handelt es sich bei der mit dem Bezugszeichen 22 bezeichneten Öffnung um die Eintrittsöffnung und die mit dem Bezugszeichen 23 bezeichneten Öffnung um die Austrittsöffnung. In der Mitte des hohlzylindrischen Bereichs 21 ist vorliegend eine sich in radialer Richtung der Klappe 2 erstreckende, durchgehende Trennwand (nicht dargestellt) angeordnet, welche der Klimazonentrennung von Fahrer- und Beifahrerseite dient. Ferner weist die Klappe 2 ein zentrales Luftleitelement 25 und zwei seitlich angeordnete Luftleitelemente 26 auf, wobei sich jedes der seitlichen Luftleitelemente 26 ausgehend von den kreisförmigen Bereichen 24 über 60 mm erstreckt, und das zentrale Luftleitelement 25 sich zwischen denselben über eine Länge von 120 mm erstreckt. Die seitlichen Luftleitelemente 26 verlaufen in ihren an den hohlzylindrischen Bereich 21 angrenzenden Bereichen annähernd in radialer Richtung und sind, wie aus Fig. 25 ersichtlich, weiter innen in Richtung der Öffnung zu gekrümmt. Das zentrale Luftleitelement 25 ist ebenfalls gekrümmt ausgebildet, wobei es von einem Bereich zwischen den beiden Öffnungen 22 und 23 ausgeht und sich entlang der Wand nach innen gekrümmt in Richtung der Öffnung 22 erstreckt. Die zweite Öffnung 23 ist ohne Luftleitelemente ausgebildet. Im Bereich der Öffnungen 22 und 23 sind in radialer Richtung nach außen vorstehende Anschläge vorgesehen, welche sowohl als Endanschläge für die Drehbewegung der Klappe 2 als auch der Abdichtung, insbesondere im Bereich der Endstellungen, dienen.

Die Luftmisch- und -verteilerklappe 2 von Fig. 26 ist im Wesentlichen entsprechend der Klappe von Fig. 25 ausgebildet, so dass gleiche oder gleichwirkende Elemente mit den gleichen Bezugszeichen versehen sind. Im Unterschied zur Klappe von Fig. 25 sind jedoch die Luftleitelemente 25 und 26 durch sich im Wesentlichen entlang der Mantelfläche des hohlzylindrischen Bereichs 21 erstreckende Bereiche gebildet. Auch in diesem Fall sind nach außen vorstehende Anschläge im Bereich der Öffnungen 22 und 23 ausgebildet.

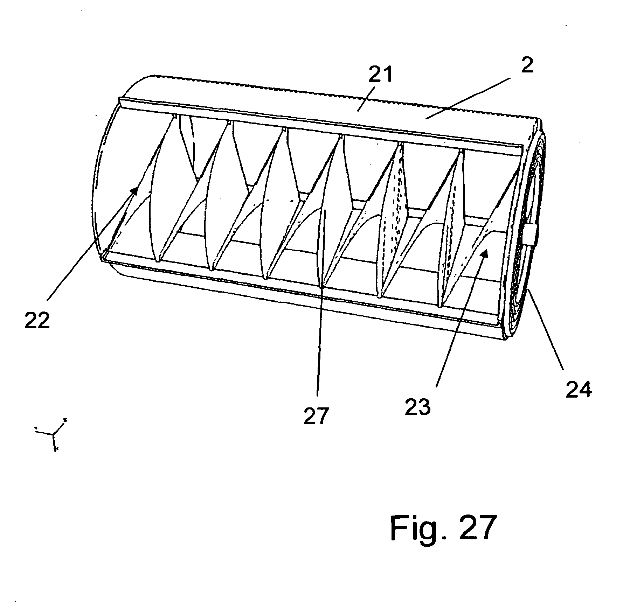

Die in Fig. 27 dargestellte Luftmisch- und -verteilerklappe, 2 weist zwei sich in Längsrichtung des hohlzylindrischen Bereichs 21 erstreckende Öffnungen 22, 23 auf. Ferner ist im Inneren des hohlzylindrischen Bereichs 21 ein Luftleit- oder Mischelement 27 vorgesehen, welches sich kreuzende Strömungen zur Mischung der kalten und warmen Luft erzeugt. Hierfür sind in der eintrittsseitigen Öffnung 22 zick-zack-förmig zwischen den längsseitigen Enden verlaufende Ebenen mit einem Übergangsbereich zwischen denselben angeordnet, welche sich keilförmig verjüngend bis zur Mittellängsachse der Klappe 2 erstrecken.

## Patentansprüche

1. Heizungs- und/oder Klimaanlage, insbesondere für ein Kraftfahrzeug, die von dem Fahrzeuginnenraum zuzuführender Luft zur Temperierung derselben durchströmbar ist, mit einer kombinierten Luftmisch- und Verteilerklappe (2), die zumindest teilweise zylinderförmig ausgebildet ist, um eine Drehachse (5) verdrehbar ist, und zur Regelung der Lufttemperatur und der Luftverteilung der dem Fahrzeuginnenraum zuzuführenden Luft dient, bei der zwei zuführende Luftkanäle (W und K) und mindestens drei weiterführende Luftkanäle (B, D, F) vorgesehen sind, wobei die kombinierten Luftmisch- und Verteilerklappe (2) Flächen aufweist, welche derart ausgebildet sind, dass sie einer Stellung, in welcher der eine zuführende Luftkanal (W bzw. K) vollständig geöffnet ist, den jeweils anderen zuführenden Luftkanal (K bzw. W) vollständig verschließt, wobei die Flächen durch Bereiche der Mantelfläche der kombinierten Luftmisch- und Verteilerklappe (2) gebildet werden, **dadurch gekennzeichnet, dass** als weiterführende Luftkanäle ein Defrostkanal (D), ein Fußraumkanal (F) und ein Belüftungskanal (B) vorgesehen sind, und der Defrostkanal (D) zwischen den beiden anderen Kanälen (B, F) angeordnet ist.

2. Anlage nach Anspruch 1, **dadurch gekennzeichnet, dass** ein Defrostkanal (D) gegenüberliegend einem Warmluftkanal (W) angeordnet ist

3. Anlage nach einem der vorhergehenden Ansprüche, **dadurch gekennzeichnet, dass** ein Belüftungskanal (B) gegenüberliegend einem Kaltluftkanal (K) angeordnet ist.

4. Anlage nach einem der vorhergehenden Ansprüche, **dadurch gekennzeichnet, dass** in der kombinierten Luftmisch- und Verteilerklappe (2) Luftleitelemente (25, 26, 27) und/oder Kanalstrukturen ausgebildet sind.

5. Anlage nach einem der vorhergehenden Ansprüche, **dadurch gekennzeichnet, dass** eine Asymmetrie der Mittelebene beider zuführender Luftkanäle (W, K) bezüglich der Mittelebene des mittleren der weiterführenden Luftkanäle (F) von 0 bis 30°, insbesondere von 9 bis 18°, vorgesehen ist.

6. Anlage nach einem der vorhergehenden Ansprüche, **dadurch gekennzeichnet, dass** die zwei zuführenden Luftkanäle (W und K) und/oder mindestens zwei weiterführende Luftkanäle (B, D, F) direkt aneinander angrenzende Öffnungen zur kombinierten Luftmisch- und Verteilerklappe (2) aufweisen.

7. Anlage nach Anspruch 6, **dadurch gekennzeichnet, dass** im Bereich der Öffnung zum weiterführenden Fußraumkanal (F) eine Versperrung (2') angeordnet ist, welche auf der Seite der Öffnung zum Belüftungskanal (B) angeordnet ist.

8. Anlage nach Anspruch 6 oder 7, **dadurch gekennzeichnet, dass** im Bereich der Öffnung zum zuführenden Kaltluftkanal (K) eine Versperrung (2') angeordnet ist, welche auf der Seite der Öffnung zum zuführenden Warmluftkanal (W) angeordnet ist.

9. Anlage nach einem der vorhergehenden Ansprüche, **dadurch gekennzeichnet, dass** für die Regelung der Luftaustrittstemperatur (T) in den Fahrzeuginnenraum und zur Regelung der Luftverteilung auf die weiterführenden Luftkanäle (B, D, F) genau ein gemeinsames Bedienelement (10) vorgesehen ist, und ein fester Zusammenhang zwischen der Luftverteilung auf die Luftkanäle (B, D, F) und der Luftaustrittstemperatur (T) besteht.

## Claims

1. A heating and/or air conditioning system, specially for a motor vehicle, through which air which is to be supplied to the inside of the vehicle and is used to control the temperature thereof flows, comprising a combined air fixing sand distributing flap (2), which is embodied as at least partially cylindrical, can be rotated about a rotational axis (5), and is used to regulate the temperature and the distribution of the air to be supplied to the vehicle inferior, in which two feeding air channels (W and K) and at least three forwarding air channels (B, D, F) are provided, wherein the combined air mixing and distributing flap (2) comprises surfaces, which are designed such that, in a position in which one of the feeding air channels (W or K) is fully open, the other feeding air channel (K or W) is fully closed, wherein the surfaces are formed by regions of the envelope surface of the combined air mixing and distributing flap (2), **characterised in that** a defrosting channel (D), a flour channel (F) and a ventilation channel (B) are provided as forwarding air channels, and the defrost channel (D) is disposed between the two other channels (B, F).

2. The system according to claim 1, **characterised in that** a defrost channel (D) is disposed opposite a hot air channel (W).

3. The system according to any one of the preceding claims, **characterised in that** a ventilation channel (B) is disposed opposite a cold air channel (K).

4. The system according to any one of the preceding claims, **characterised in that** air guiding elements (25, 26, 27) and/or channel structures are formed in the combined air fixing and distributing flap (2).

5. The system according to any one of the preceding claims, **characterised in that** an asymmetry of the centre plane of the two feeding air channels (W, K) in relation to the centre plane of the central one of the forwarding air channels (F) of 0 to 30°, especially of 9 to 18° is provided.

6. The system according to any one of the preceding claims, **characterised in that** the two feeding air channels (W and K) and/or at least two forwarding air channels (B, D, F) have directly adjacent openings to the combined air mixing and distributing flap (2).

7. The system according to claim 6, **characterised in that**, in the region of the opening to the forwarding floor channel (F), an obstruction (2') is disposed, which is disposed on the side of the opening to the ventilation channel (B).

8. The system according two claim 6 or 7, **characterised in that**, in the region of the opening to the feeding cold air channel (K), an obstruction (2') is disposed, which is disposed on the side of the opening to the feeding hot air channel (W).

9. The system according to any one of the preceding claims, **characterised in that** precisely one shared operating element (10) is provided for regulating the air outlet temperature (T) into the vehicle interior and for regulating the air distribution to the forwarding air channels (B, D, F), and a fixed correlation exists between the air distribution to the air channels (B, D, F) and the air outlet temperature (T).

## Revendications

1. Système de chauffage et / ou de climatisation, en particulier pour un véhicule automobile, qui peut être traversé par de l'air à fournir à l'habitacle du véhicule et servant à tempérer cet agir d'alimentation, comprenant un volet combiné (2) mélangeur est répartiteur d'air qui est configuré au moins partiellement en forme de cylindre, en pouvant tourner autour d'un axe de rotation (5), et sert à la régulation de la température de l'air et à la répartition de l'air à fournir à l'habitacle du véhicule, système dans lequel il est prévu deux conduits d'alimentation d'air (W et K) et au moins trois conduits d'air se prolongeant (B, D, F), où le volet combiné (2) mélangeur et répartiteur d'air présente des surfaces qui sont configurées de manière telle, que dans une position dans laquelle l'un des conduits d'alimentation d'air (W ou K) est complètement ouvert, ledit volet combiné ferme complètement, à chaque fois, l'autre conduit d'alimentation d'air (K ou W), où les surfaces sont formées par des zones de la surface latérale du volet combiné (2) mélangeur et répartiteur d'air,
**caractérisé en ce qu'**il est prévu, comme conduits d'air se prolongeant, un conduit de dégivrage (D), un conduit d'air (F) pour les pieds et un conduit de ventilation (B), et le conduit de dégivrage (D) est disposé entre les deux autres conduits (B, F).

2. Système selon la revendication 1, **caractérisé en ce qu'**un conduit de dégivrage (D) est disposé en faisant face à un conduit d'air chaud (W).

3. Système selon l'une ou l'autre des revendications précédentes, **caractérisé en ce qu'**un conduit de ventilation (B) est disposé en faisant face à un conduit d'air froid (K).

4. Système selon l'une quelconque des revendications précédentes, **caractérisé en ce que** des éléments déflecteurs d'air (25, 26, 27) et / ou des structures de conduit sont configurés dans le volet combiné (2) mélangeur et répartiteur d'air.

5. Système selon l'une quelconque des revendications précédentes, **caractérisé en ce qu'**il est prévu une asymétrie du plan médian des deux conduits d'alimentation d'air (W, K), de 0° à 30°, en particulier de 9° à 18° par rapport au plan médian de celui des conduits d'air se prolongeant (F), placé au milieu.

6. Système selon l'une quelconque des revendications précédentes, **caractérisé en ce que** les deux conduits d'alimentation d'air (W et K) et / où au moins deux conduits d'air se prolongeant (B, D, F) présentent des ouvertures directement contiguës entre elles, donnant sur le volet combiné (2) mélangeur et répartiteur d'air.

7. Système selon la revendication 6, **caractérisé en ce qu'**une obturation (2') est disposée dans la zone de l'ouverture donnant sur le conduit d'air se prolongeant (F), pour les pieds, laquelle obturation est disposée sur le côté de l'ouverture donnant sur le conduit de ventilation (B).

8. Système selon la revendication 6 ou 7, **caractérisé en ce qu'**une obturation (2') est disposée dans la zone de l'ouverture donnant sur le conduit d'alimentation d'air froid (K), laquelle obturation est disposée sur le côté de l'ouverture donnant sur le conduit d'alimentation d'air chaud (W).

9. Système selon l'une quelconque des revendications précédentes, **caractérisé en ce qu'**il est prévu précisément un élément de commande commun (10), pour la régulation de la température de sortie d'air (T) dans l'habitacle du véhicule et pour la régulation de la répartition d'air sur les conduits d'air se prolongeant (B, D, F), et il existe unie corrélation constante entre la répartition d'air sur les conduits d'air (B, D, F), et la température de sortie d'air (T).
